# EUROPEAN PATENT APPLICATION

(11) **EP 1 553 675 A2**
(43) Date of publication of application: **13.07.2005**
(21) Application number: 04300887.9
(22) Date of filing: 14.12.2004
(51) Int. Cl.: H02G 9/00

(54) **Armouring joint, an armoured cable joint and a method for jointing armouring of two armoured cables**

(30) Priority: 15.12.2003 NO 20035596
(71) Applicant: Nexans, 75008 Paris (FR)
(72) Inventor: Grinden, Kjell, 2009, Nordby (NO); Steinsland, Bjart-Are, 0571, Oslo (NO)
(74) Representative: Feray, Valérie

(57) **Abstract**

The invention concerns an armouring joint (10) between a first armoured cable comprising N first armouring stranded wires (1A to 8B) and a second armoured cable comprising N second armouring stranded wires (1'A to 10'B), **characterized in that** a number K lower than N of first armouring wires (1B to 8B), called shorter first wires, are shorter than N-K first armouring wires (1A to 10A), called longer first wires, a number N-K of second armouring wires (3'B to 10'B), called shorter second wires, are shorter than K second armouring wires (1'A to 10'A), called longer second wires, **and in that** K shorter first wires (1B to 8B) and N-K shorter second wires (3'B to 10'B) are respectively abutting or nearly abutting with K longer second wires (1'A to 10'A) and N-K longer first wires (1A to 10A), thereby forming an armouring common zone (11) comprising first and second armouring wires (1A to 10A, 1'A to 10'A). The invention also concerns an armoured cable joint and a method for making or repairing an armouring joint.

## Description

The present invention relates to the field of cables joint and more precisely an armouring joint, an armoured cable joint and a method for jointing armouring of two armoured cables.

An armoured cable typically comprises:
- one or several cable element(s) such as optical fiber element(s) sometimes disposed within a central steel tube and/or power cable element(s) and/or hydraulic steel tubes
- generally an inner sheath, e.g. of extruded polyethylene, onto the central steel tube or onto the stranded elements,
- one armouring which is a layer of stranded steel wires over the inner sheath,
- an outer sheath, e.g. of extruded polyethylene, over the armouring.

For jointing of two armoured cables, it is known to use a joint box for the whole, including strain termination for armouring steel wires and, if required, a chamber for coiling excess fiber length.

The joint box has a larger diameter than the entire cables it is used to joint; thereby this joint box is expensive, complex to install and time consuming.

The invention aims at providing a cable with one armouring joint contributing to the reduction of the diameter of the total cable joint and preferably ensuring enhanced mechanical properties of cables in the joint area.

To this purpose, the invention provides a cable comprising first and second armoured cables respectively comprising N first armouring stranded wires and N second armouring stranded wires and an armouring joint between said first and second armoured cables,
characterized in that a number K lower than N of first armouring wires, called shorter first wires, are shorter than N-K first armouring wires, called longer first wires,
a number N-K of second armouring wires, called shorter second wires, are shorter than K second armouring wires, called longer second wires,
and in that K shorter first wires and N-K shorter second wires are respectively abutting or nearly abutting with K longer second wires and N-K longer first wires thereby forming an armouring common zone comprising first and second armouring wires.

The armouring common zone forms an extension of the two armourings which maintains the same diameter in the joint area and is easy to make.

The invention is applicable to any armoured cable such as optical fiber cable, power cable, composite cable and is of great interest in large cable such as umbilical.

Advantageously, in order to reinforce the mechanical properties of the joint, the armouring joint can comprise a layer of preformed steel wires over at least said armouring common zone and an substantially equal length on each side of said armouring common zone, in order to grip both cable ends, and preferably with steel wires of larger total cross-sectional area than armouring wires.

The layer of preformed steel wires should combined be able to take more tension than armouring wires combined.

In one embodiment of the invention, said longer first wires are not adjacent and preferably are regularly spaced from each other. Identically, said longer second wires are not adjacent and preferably are regularly spaced from each other.

Preferably, said number K can be equal to entire part of N/2, by way of example, there is an alternance of longer first (or second) and shorter first (or second) wires.

In an advantageous embodiment of the invention, said armouring common zone has a so-called common length equal to at least one pitch length, and preferably with said pitch length substantially equal to the pitch length of the armouring from any of said first of second armoured cables.

By way of example, the common zone can be greater or equal to 0,5 m.

According the invention, the armoured cable joint comprises two abutting positions separated by a length substantially equal to said common length.

Doing this way, all shorter first (and second) wires have the same length.

According the invention, armouring wires can be made of steel.

In a preferred embodiment of the invention, each of said armoured cables comprising optical fibers within a first steel tube, said cable further comprises spliced optical fibers and a first steel tube joint under said armouring joint.

Said steel tube joint can preferably comprise:
- an overlaid steel tube over said spliced optical fibers,
- and two second steel tubes,
each of said second steel tubes being covered at a first end by one distinct end of said overlaid steel tube and being covered at a second end by one end of said first steel tubes, any of said tubes made of steel being end crimped.

Each of said armoured cables comprising inner and outer sheaths, said cable can comprise under said armouring joint, a heat shrunk hose welded by a polyethylene tape to inner sheaths at both the ends of said inner sheaths and, said cable can comprise, over said armouring joint, a heat shrunk hose welded by a polyethylene tapeto the outer sheaths oat both ends of said outer sheaths.

Therefore, each polyethylene tape is not applied over the entire length of the joint, but merely at the transition between heat shrink hose and inner or outer sheaths. Heat is then applied to this area in order to weld inner or outer sheaths to heat shrink hose.

The above described joint is substantially as small as the diameter of the cables.

The invention also proposes a method for making or repairing a cable comprising first and second armoured cables respectively comprising N first armouring stranded wires and N second armouring stranded wires and an armouring joint between said first and second armoured cables characterized in that it comprises the successive following steps:
- cut said N first and N second armouring wires so that they overlap in a certain overlapping length,
- cut, over a distance substantially equal to said overlapping length, a number K lower than N of first armouring wires and N-K of second armouring wires to provide K shorter first wires and N-K shorter second wires,
- lay back all said first and second armouring wires so that K shorter first wires and N-K shorter second wires are respectively abutting or nearly abutting with K longer second wires and N-K longer first wires, thereby forming a common armouring zone.

The overlapping length could be the same for each couple of first and second wires to joint or could be chosen individually for each of those couples.

Lay back can preferably be done with approximately the same pitch length as said armoured cables.

The method for making or repairing a cable can comprise a step of securing said common armouring zone with straps or a tape.

The method for making or repairing a cable can also comprise a step of directly applying a number of preformed steel wires over at least said armouring common zone.

Further characteristics and advantages of the invention will become clear on reading the following description of embodiments of the invention, given by way of examples only, and made with reference to the accompanying drawings in which:
- Figure 1 shows schematically and partially a longitudinal view (not in scale) of a cable including two armoured cables and an armouring joint of the two armoured cables according to one first embodiment of the invention;
- Figure 2 shows schematically and partially a longitudinal view (not in scale) of a cable with spliced optical fibers and cabled steel tube joint disposed under the armouring joint of figure 1 ;
- Figure 3 shows schematically a cross sectioned view (not in scale) of a cable including two armoured cables and an armoured cable joint of the two armoured cables according to a second embodiment of the invention.

Elements performing the same functions are symbolized with the same references in the two embodiments.

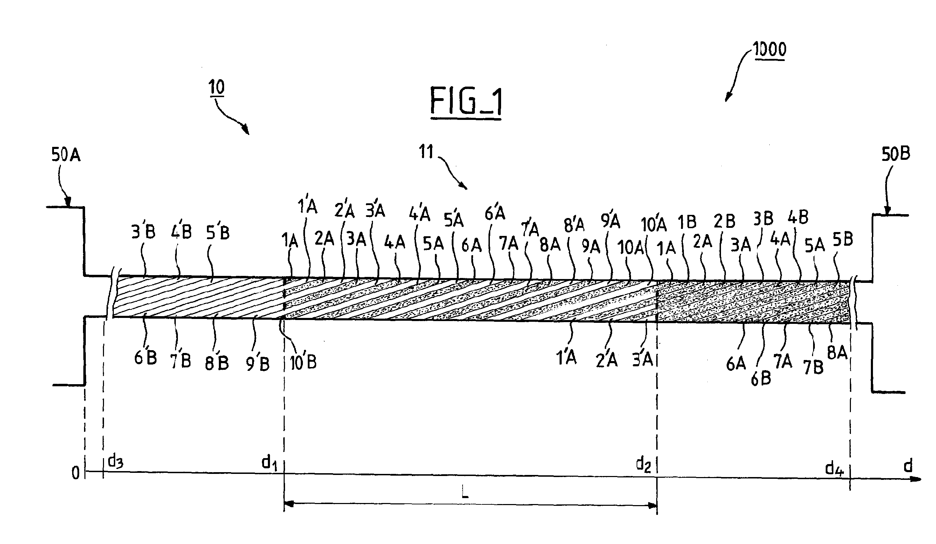

Figure 1 shows schematically and partially a longitudinal view (not in scale) of a cable 1000 including two armoured cables such as optical fiber umbilicals and an armouring joint 10 of the armoured cables, in first embodiment of the invention.

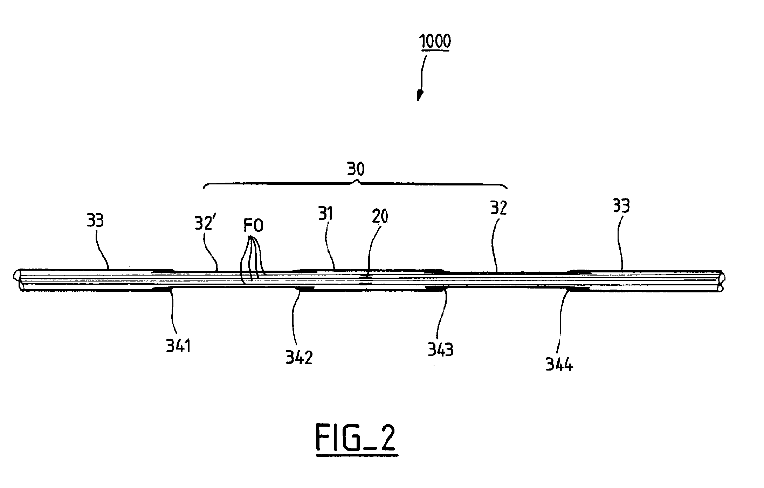

Starting from the core till the periphery, each optical fiber umbilical (partially shown) of the cable 1000 comprises:
- cable element(s) such as optical fibers within a central steel tube (see figure 2),
- an inner sheath layer of extruded polyethylene,
- an armouring which is a layer of for instance twenty stranded steel wires 1A to 8B (not all viewable) or 1'A to 10'B (not all viewable), giving a certain pitch length,
- and an outer sheath 50A, 50B of extruded polyethylene.

In a variant (not shown), cable elements such as insulated copper conductors for power or signal transmission and/or hydraulic steel tubes could be added or replaced the optical fiber element.

The outer sheaths 50A, 50B of extruded polyethylene are removed from each cables end, along a certain distance greater than that required for armouring jointing such as 3 m, leaving each armouring 1A to 10B or 1'A to 10'B stripped, thereby giving a finished jointing length of approximately 5 m about 1 m of armouring wires is cut away during assembly.

Ten of first armouring wires 1B to 8B, called shorter first wires, are shorter than ten first armouring wires 1A to 10A called longer first wires. Shorter first wires 1 B to 10B are preferably chosen not adjacent and regularly spaced from each other.

Ten of second armouring wires 3'B to 10'B, called shorter second wires, are shorter than ten second armouring wires 1'A to 10'A called longer second wires. Shorter first wires 1B to 8B are chosen preferably not adjacent and regularly spaced from each other.

Each shorter first wire 1 B to 8B is respectively abutting, i.e. welded end to end, with a longer second wire 1'A to 10'A - or in a variant not shown nearly abutting,i.e without welding -. Each longer first wire 1A to 10A is respectively abutting or nearly abutting with shorter second armouring wires 3'B to 10'B,

Therefore, an armouring common zone 11 with second and first wires is formed on a certain common length L.

In this first embodiment, the armouring common zone 11 comprises an alternance between longer first wires 1A to 10A and longer second wires 1'A to 10'A.

The common length L is equal to at least one pitch length. In a variant (not shown) it could be up to two pitch lengths or even more. Preferably, the pitch length in the common armouring zone 11 is substantially equal to the armouring pitch length in both umbilicals.

Two abutting positions d1, d2 are referenced in a longitudinal axis d of the joint starting from one prepared first umbilical end (on the left). For example d1 is equal to two meters and d2 is equal to 2,5 meters.

In a first variant (not shown), there are more than two lengths of first (and second) wires, thereby more than two abutting positions.

In a second variant (not shown), there are more longer first (and second shorter) wires than shorter first ( and longer second) wires.

For instance the end of the cut second umbilical is at a distance d5 equal to 5 m from the end of the cut first umbilical.

To make (or to repair) the cable 1000 with the armouring jointing 10, at first, all steel wires 1A to 10'B and the inner sheath have been preferably cleaned properly. At second, all steel wires are cut so that first steel wires 1A to 10A overlap in a given overlapping length, here equal to 50 cm, with the second steel wires 1'A to 10'A. At third, ten wires 1 B to 8B, 3'B to 10'B which are not adjacent are cut 50 cm shorter on each cables end.

At fourth, all wires 1 A to 10'B are laid back with approximately the same pitch length. Therefore the ten shorter first wires 1 B to 8B and the ten shorter second wires 3'B to 10'B are respectively abutting with the ten longer second wires 1'A to 10'A and the ten longer first wires 1A to 10A. The laid back wires could be secured with straps or tape.

Preferably, a layer of preformed steel wires is applied over at least the armouring common zone 11 and an substantially equal length on each side of this armouring common zone 11.

For instance the ends of the layer are at d3 and d4 respectively equal to 0,75 m and 3,75 m. Tape and/or straps are removed as the layer is applied. The steel wires of the layer present a larger diameter than the one of the armouring steel wires.

The armouring joint 10 should preferably be over the individual splices 20 of the optical fibers FO of the cable 1000 and a cabled steel tube joint 30 of the cable 1000 which are shown in figure 2.

The cabled steel tube joint 30 comprises :
- an overlaid steel tube 31 over the spliced optical fibers FO,
- and first and second steel tubes 32, 32'.

The first steel tube 32 is covered at a first end 343 by a first end of the overlaid steel tube 31 and at a second end 344 by the end of the first central steel tube 33 of the first umbilical.

The second steel tube 32' is covered at a first end 342 by the second end of the overlaid steel tube 31 and, at a second end 341, by the end of the second central steel tube 33 of the second umbilical.

The ends 341 to 344 of those steel tubes 31 to 33' are crimped.

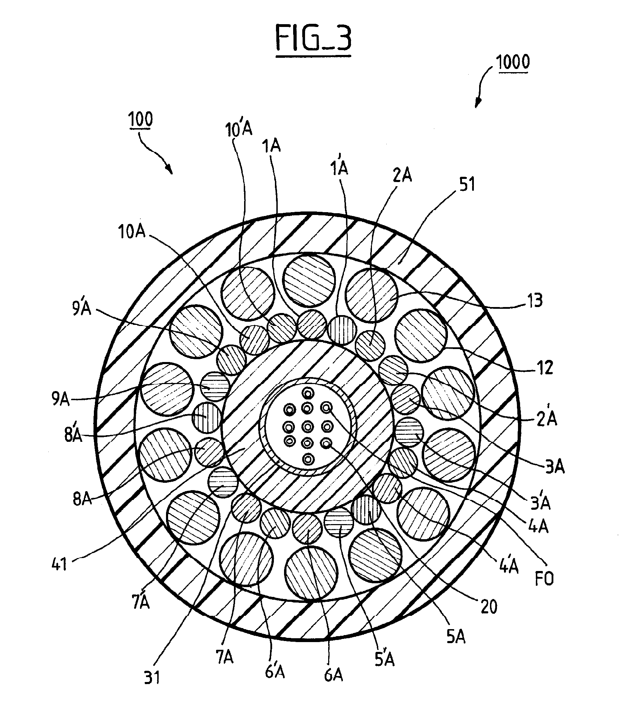

More precisely, the armouring joint 10 is not in contact with the cabled steel tube joint 30, the latter being covered directly by a heat shrink hose (see figure 3).

Figure 3 shows schematically a cross sectioned view (not in scale) of a cable 1000 including two armoured cables such as optical fiber umbilicals and an armoured cable joint 1000. The cross section is made around the splices 20 of the optical fibers FO.

Starting from the core till the periphery, the total joint 100 comprises:
- spliced optical fibers FO,
- an overlaid steel tube 31 of cabled steel tubes joint 30
- a heat shrunk hose 41 welded by a polyethylene tape to the inner sheaths of two umbilicals (not shown) for inner sheath jointing,
- an armouring joint 10 with a layer longer first and second wires 1A to 10'A covered by a layer 12 of larger preformed steel wires 13,
- a heat shrunk hose 51 welded by a polyethylene tape to the outer sheaths of two umbilicals (not shown), for outer sheath jointing.

The armoured cable joint is exempt from external joint closure or coil chamber, has a small total diameter and good mechanical properties.

Of course to make the armoured cable joint 100, all elements are cut in a sufficient distance on each side. Prior to tube jointing, the heat shrink hoses are pulled over inner/outer sheaths. Heat shrink hose and outer sheaths could be prepared to be end conical toward the tube joint, in a complementary way.

## Claims

1. Cable (1000) comprising first and second armoured cables respectively comprising N first armouring stranded wires (1A to 10B) and N second armouring stranded wires (1'A to 10'B) and an armouring joint (10, 100) between said first and second armoured cables ,
**characterized in that** a number K lower than N of first armouring wires (1B to 10B), called shorter first wires, are shorter than N-K first armouring wires (1A to 10A), called longer first wires,
a number N-K of second armouring wires (1'B to 10'B), called shorter second wires, are shorter than K second armouring wires (1'A to 10'A), called longer second wires,
and **in that** K shorter first wires (1B to 10B) and N-K shorter second wires (1'B to 10'B) are respectively abutting or nearly abutting with K longer second wires (1'A to 10'A) and N-K longer first wires (1A to 10A), thereby forming an armouring common zone (11) comprising first and second armouring wires (1A to 10A, 1'A to 10'A).

2. Cable (1000) according to claim 1 **characterized in that** said armouring joint (10, 100) comprises a layer (12) of preformed steel wires (13) over at least said armouring common zone (11) and an substantially equal length on each side of said armouring common zone and preferably with steel wires (13) of larger cross-sectional area than the one of armouring wires (1'A to 10'B).

3. Cable (1000) according to any of claims 1 or 2 **characterized in that** said longer first wires (1A to 10A) are not adjacent and preferably are regularly spaced from each other and **in that** said longer second wires (1'A to 10'A) are not adjacent and preferably are regularly spaced from each other.

4. Cable (1000) according to any of claims 1 to 3 **characterized in that** said number K is equal to entire part of N/2.

5. Cable (1000) according to any of claims 1 to 4 **characterized in that** said armouring common zone (11) has a so-called common length (L) equal to at least one pitch length, and preferably with said pitch length substantially equal to the pitch length of the armouring from any of said first of second armoured cables.

6. Cable (1000) according to any of claims 1 to 5 **characterized in that** it comprises two abutting positions (d1, d2) separated by a length substantially equal to said common length.

7. Cable (1000) according to any of claims 1 to 6 **characterized in that** armouring wires (1A to 10'B) are made of steel.

8. Cable (1000) according to any of claims 1 to 7 **characterized in that**, each of said armoured cables comprising optical fibers (FO) within a first steel tube (33, 33'), said cable further comprises spliced optical fibers (FO) and a first steel tube joint (30) under said armouring joint (10).

9. Cable (1000) according to claim 8 **characterized in that** said first steel tube joint (30) comprises :
- an overlaid steel tube (31) over said spliced optical fibers (FO),
- and two second steel tubes (32, 32'),
each of said second steel tubes (32, 32') being covered at a first end by one distinct end of said overlaid steel tube (31) and being covered at a second end by one end of said first steel tubes (33, 33'), any of said tubes (31 à 33') made of steel being end crimped (341 à 344).

10. Cable (1000) according to any of claims 1 to 9 **characterized in that**, each of said armoured cables comprising inner and outer sheaths, said cable comprises, under said armouring joint (10), a heat shrunk hose (41) welded by a polyethylene tape to inner sheaths at both ends of said inner sheaths and **in that** said cable comprises , over said armouring joint (10), a heat shrunk hose (51) welded by a polyethylene tape to the outer sheaths at both the ends of said outer sheaths (50A, 50B).

11. Method for making or repairing a cable (1000) comprising first and second armoured cables respectively comprising N first armouring stranded wires (1A to 10B) and N second armouring stranded wires (1'A to 10'B) and an armouring joint (10, 100) between said first and second armoured cables
**characterized in that** it comprises the successive following steps:
- cut said N first and N second armouring wires (1A to 10'B) so that they overlap in a certain overlapping length,
- cut, over a distance substantially equal to said overlapping length, a number K lower than N of first armouring wires (1B to 10B) and N-K of second armouring wires (1'B to 10'B) to provide K shorter first wires and N-K shorter second wires,
- lay back all said first and second armouring wires (1A to 10'B) so that K shorter first wires (1B to 10B) and N-K shorter second wires (1B to 10B) are respectively abutting or nearly abutting with K longer second wires (1'A to 10'A) and N-K longer first wires (1A to 10A), thereby forming a common armouring zone (11).

12. Method for making or repairing a cable (1000) according to claim 11
**characterized in that** lay back is done with approximately the same pitch length as said armoured cables

13. Method for making or repairing a cablen (1000) according to any of claims 11 or 12 and in that it comprises a step of securing said common armouring zone (11) with straps or a tape.

14. Method for making or repairing a cable (1000) according to any of claims 11 to 13 **characterized in that** it comprises a step of directly applying a number of preformed steel wires (13) over at least said armouring common zone (11 ).
